# EUROPÄISCHE PATENTSCHRIFT

(11) **EP 3 478 946 B1**
(45) Veröffentlichungstag und Bekanntmachung des Hinweises auf die Patenterteilung: **23.09.2020**
(21) Anmeldenummer: 17721667.8
(22) Anmeldetag: 04.05.2017
(51) Int. Cl.: F01N 3/20, F02M 53/06

(54) **DOSIERVORRICHTUNG ZUM DOSIEREN EINER REDUKTIONSMITTELFLÜSSIGKEIT UND VERFAHREN ZUM BETREIBEN EINER DOSIERVORRICHTUNG**
METERING DEVICE FOR METERING A REDUCTANT LIQUID AND METHOD FOR OPERATING A METERING DEVICE
DISPOSITIF DE DOSAGE POUR LE DOSAGE D'UN AGENT DE RÉDUCTION LIQUIDE ET PROCÉDÉ DE FONCTIONNEMENT D'UN DISPOSITIF DE DOSAGE

(30) Priorität: 30.06.2016 DE 102016211826
(43) Veröffentlichungstag der Anmeldung: 08.05.2019
(73) Patentinhaber: Vitesco Technologies GmbH, 30165 Hannover (DE)
(72) Erfinder: RÖSEL, Gerd, 93055 Regensburg (DE); KLÜGL, Wendelin, 92358 Seubersdorf (DE)
(74) Vertreter: Waldmann, Georg Alexander
(86) Internationale Anmeldenummer: PCT/EP2017/060714
(87) Internationale Veröffentlichungsnummer: WO 2018/001607

(56) Entgegenhaltungen:
- DE-A1-102006 025 332
- DE-A1-102011 077 951
- DE-C1- 19 743 302
- US-A1- 2006 118 651

## Beschreibung

Die Erfindung betrifft eine Dosiervorrichtung zum Dosieren einer Reduktionsmittelflüssigkeit in einen Abgasstrom einer Verbrennungsanlage, beispielweise in den Abgastrakt eines Kraftfahrzeugs. Sie betrifft ferner ein Verfahren zum Betreiben einer derartigen Dosiervorrichtung.

Dosiervorrichtungen, auch Injektoren genannt, die Wasser bzw. wässrige Lösungen in den Abgastrakt einer Verbrennungsanlage einspritzen, sind bei abgestellter Brennkraftmaschine und Außentemperaturen unter dem Gefrierpunkt gefährdet, durch ein Einfrieren des Mediums im Injektor und die dadurch bedingte Ausdehnung zerstört zu werden. Bei Niederdruckinjektoren, die beispielsweise in SCR (selektive katalytische Reduktion) - Systemen eingesetzt werden, ist besonders der Düsenbereich des Injektors gefährdet, da in diesem Bereich eine Materialverstärkung Performance-Nachteile bei der Zerstäubung der Lösung hätte.

Aus der DE 10 2004 054 238 A1 ist es bekannt, die Lösung durch Rücksaugen aus dem Injektor zu entfernen, sobald die Brennkraftmaschine abgestellt wird. Dies ist jedoch aufwendig.

DE 10 2011 077951 A1 offenbart ein Heizsystem für ein Dosierventil, insbesondere zum Dosieren eines Fluids in einen Abgasstrang eines Verbrennungsmotors, umfassend mindestens ein Heizelement, das mit einer Quelle für elektrische Energie verbunden oder verbindbar ist. Das Dosierventil umfasst einen Ventilgehäuseschaft, der an seinem einen Ende mit dem Abgasstrang verbunden ist, und einen innerhalb des Ventilgehäuseschafts ausgebildeten Dosierraum, in dem sich betriebsgemäß Fluid befindet. Das Heizelement ist dazu ausgebildet, in dem Dosierraum befindliches Fluid, wenigstens nach Außerbetriebnahme des Verbrennungsmotors, zu erwärmen.

DE 10 2006 025332 A1 offenbart ein Verfahren und eine Vorrichtung zur katalytischen Verbrennung von in einen Abgastrakt einer Verbrennungskraftmaschine mittels eines Einspritzventils eindosierten Kraftstoffes. Im Abgastrakt der Verbrennungskraftmaschine ist ein Oxidationskatalysator aufgenommen. Der eindosierte Kraftstoff wird über das Einspritzventil in einer Abgasströmung zerstäubt. Mittels einer Heizeinrichtung wird ein der Abgasströmung in einem Abgasrohr zuweisendes Ende des Einspritzventils kontinuierlich oder periodisch beheizt oder ein vom Einspritzventil thermisch entkoppeltes Ende des Einspritzventils wird von der Abgasströmung unmittelbar erwärmt.

DE 197 43 302 C1 offenbart ein Verfahren zum Ausstoßen und Zumessen von elektrisch leitfähigem, flüssigem Reduktionsmittel zur Abgasnachbehandlung bei einer Brennkraftmaschine. Der Einspritzdruck wird direkt im Injektor erzeugt. Durch kurzzeitige Zufuhr von elektrischer Energie mittels in die Flüssigkeit eintauchender Elektroden wird die elektrische Leitfähigkeit der Flüssigkeit genutzt, um die Dampfblase unmittelbar in der Flüssigkeit zu bilden. Die Dampfblase verdrängt eine bestimmte Flüssigkeitsmenge, die über eine Düse abgespritzt wird.

Es ist eine Aufgabe der vorliegenden Erfindung, eine Dosiervorrichtung zum Dosieren einer Reduktionsmittelflüssigkeit in einen Abgasstrom einer Verbrennungsanlage anzugeben, bei der eine Schädigung der Dosiervorrichtung durch Einfrieren des Reduktionsmittels verhindert wird. Ferner soll ein Verfahren zum Betreiben einer derartigen Dosiervorrichtung angegeben werden.

Diese Aufgabe wird gelöst durch den Gegenstand der unabhängigen Patentansprüche.

Vorteilhafte Ausgestaltungen und Weiterbildungen der Erfindung sind Gegenstand der Unteransprüche.

Gemäß einem Aspekt der Erfindung wird eine Dosiervorrichtung zum Dosieren einer Reduktionsmittelflüssigkeit in einen Abgasstrom einer Verbrennungsanlage angegeben, wobei die Dosiervorrichtung einen Einlass und einen Auslass für Reduktionsmittel und eine zwischen dem Einlass und dem Auslass angeordnete Absperrvorrichtung aufweist. Im Bereich der Absperrvorrichtung ist zumindest ein elektrisch betreibbares Heizelement angeordnet.

Bei der Dosiervorrichtung handelt es sich insbesondere um einen Injektor zum Einspritzen einer wässrigen Lösung, beispielsweise Harnstofflösung, in den Abgastrakt eines Kraftfahrzeugs zur Abgasnachbehandlung.

Bei dem elektrisch betreibbaren Heizelement kann es sich insbesondere um eine Niederenergieheizung mit einer Heizleistung von etwa 1 Watt handeln. Wie sich herausgestellt hat, ist eine derartige Heizleistung ausreichend, um eine Temperaturerhöhung um 10 K des Reduktionsmittels im Bereich der Absperrvorrichtung zu erzielen. Dies ist in der ganz überwiegenden Mehrzahl der Fälle ausreichend, um ein Einfrieren der Reduktionsmittelflüssigkeit im besonders gefährdeten Bereich der Absperrvorrichtung zu verhindern.

Wie sich gezeigt hat, weisen die Injektorspitze und der Kühlmantel, insbesondere bei einer Wasserluftkühlung des Injektors, aufgrund geringer Flächen ausreichend hohe thermische Widerstände auf. Dadurch ist es möglich, den Energiebedarf des Heizelements so gering zu halten, dass beispielsweise aus einer Batterie mit 65 Ah/12 V (780 Wh) innerhalb von 8 Stunden lediglich 1 % der enthaltenen Energie für eine Temperaturerhöhung von 10 K genutzt werden müsste.

Die Dosiervorrichtung hat somit den Vorteil, dass eine Schädigung insbesondere des besonders sensiblen Bereichs der Absperrvorrichtung vor einer Zerstörung durch Einfrieren des Reduktionsmittels geschützt werden kann.

Erfindungsgemäß ist das zumindest eine Heizelement im Bereich einer Düse der Dosiervorrichtung angeordnet. Eine derartige Düse ist typischerweise im Bereich des Auslasses der Dosiervorrichtung in Form einer Düsenplatte mit Löchern angeordnet. Da die Ausgestaltung der Düse durch die Art des zu erzeugenden Sprays bestimmt ist, ist eine Materialverstärkung an der Düsenplatte zum Schutz vor Schädigungen durch einfrierendes Reduktionsmittel typischerweise nachteilig. Eine gezielt in diesem Bereich erfolgende Heizung hat den Vorteil, dass der besonders sensible Bereich der Düse geschützt wird, ohne dass Veränderungen an der Düsenplatte vorgenommen werden müssen.

Gemäß einer erfindungsgemäßen Ausgestaltung ist das zumindest eine Heizelement dadurch gebildet, dass eine erste Elektrode in der Dosiervorrichtung bis in die Nähe der Düse geführt ist und eine zweite Elektrode ein Gehäuseelement der Dosiervorrichtung im Bereich der Düse kontaktiert, so dass ein Strompfad von der ersten Elektrode durch die Reduktionsmittelflüssigkeit und das Gehäuseelement zur zweiten Elektrode gebildet ist. Bei einer Ausgestaltung ist die erste Elektrode durch den Einlass in die Dosiervorrichtung geführt.

Bei dieser Ausführungsform wird die elektrische Leitfähigkeit des Reduktionsmittels (beispielsweise wässrige Harnstofflösung) genutzt und es wird ein Stromfluss durch die Reduktionsmittelflüssigkeit in unmittelbarer Nähe der Düse erzeugt. Dadurch wird die Reduktionsmittelflüssigkeit direkt aufgeheizt.

Die zweite Elektrode, die das Gehäuseelement kontaktiert, wird insbesondere mit der Fahrzeugmasse verbunden.

Diese Ausführungsform erfordert zwar das Hindurchführen einer Elektrode durch die Dosiervorrichtung, jedoch benötigt auch sie abgesehen von den elektrischen Anschlüssen keine weiteren Bauteile und ist somit besonders einfach ausgebildet. Durch die direkte Heizung des Reduktionsmittels wird bei dieser Ausführungsform der Energieverlust gering gehalten. Insbesondere ist ein Verlust von Wärme über den Metallflansch, der den Injektor mit dem Abgastrakt verbindet, unproblematisch.

Gemäß einer weiteren erfindungsgemäßen Ausgestaltung ist das zumindest eine Heizelement dadurch gebildet, dass zumindest eine Heizpille im Bereich der Düse angeordnet und durch zumindest eine Elektrode kontaktiert ist, die durch das Gehäuse der Dosiervorrichtung bis an die Heizpille geführt ist. Eine Heizpille ist insbesondere ein gekapseltes Heizelement, z.B. ein gekapseltes PTC-Heizelement (PTC=positive temperature coefficient, positiver Temperaturkoeffizient).

Bei dieser Ausführungsform ist eine Heizpille zur Umsetzung von elektrischem Strom in Wärme als separates Element vorgesehen und in dem besonders sensiblen Bereich der Düse angeordnet, um diesen aufzuheizen. Die Heizpille wird durch mindestens eine Elektrode kontaktiert, die beispielsweise zwischen einem äußeren Ventilgehäuse und einem inneren Gehäuse, das die Kavität zur Aufnahme der Reduktionsmittelflüssigkeit aufweist, geführt ist.

Somit verläuft die Zuleitung nicht in einem "nassen" Bereich der Dosiervorrichtung, so dass keine Dichtprobleme auftreten.

Die zumindest eine Heizpille kann insbesondere als ringförmige Scheibe um die Düse ausgebildet sein. Die kann beispielsweise aus Metall oder Keramik ausgebildet sein.

Bei der Dosiervorrichtung kann es sich insbesondere um ein Magnetventil, d.h. ein magnetisch betätigbares Ventil, handeln. Derartige Ventile sind für eine präzise Dosierung von Flüssigkeiten weit verbreitet.

Gemäß einem Aspekt der Erfindung wird eine Abgasreinigungseinrichtung für ein Kraftfahrzeug angegeben, die einen Behälter zur Aufnahme und Vorhaltung eines flüssigen Reduktionsmittels, die beschriebene Dosiervorrichtung zur Abgabe des Reduktionsmittels in den Abgasstrom sowie eine den Behälter mit der Dosiervorrichtung verbindende Reduktionsmittelleitung aufweist. Insbesondere kann in die Reduktionsmittelleitung eine Pumpe geschaltet sein zur Förderung von Reduktionsmittel aus dem Behälter in den Abgastrakt des Verbrennungsmotors des Kraftfahrzeugs.

Eine derartige Abgasreinigungseinrichtung kann insbesondere zur Reduzierung von Stickoxiden in Dieselfahrzeugen eingesetzt werden. Als Reduktionsmittelflüssigkeit kommt dabei typischerweise Harnstofflösung zum Einsatz. Es ist jedoch auch denkbar, die Abgasreinigungseinrichtung für eine andere Art von Kraftfahrzeug einzusetzen und/oder eine andere Art von Reduktionsmittel zu verwenden.

Gemäß einem weiteren Aspekt der Erfindung wird ein Verfahren zum Betreiben der beschriebenen Dosiervorrichtung zum Dosieren einer Reduktionsmittelflüssigkeit in ein Abgas einer Verbrennungsanlage angegeben, wobei die Dosiervorrichtung einen Einlass und einen Auslass und eine zwischen dem Einlass und dem Auslass angeordnete Absperrvorrichtung aufweist, wobei ein Bereich der Absperrvorrichtung zumindest dann, wenn die Verbrennungsanlage außer Betrieb ist, über einen Gefrierpunkt der Reduktionsmittelflüssigkeit geheizt wird.

Das Verfahren hat den Vorteil, dass ein besonders sicherer Betrieb der Dosiervorrichtung auch bei niedrigen Außentemperaturen möglich ist. Insbesondere ist die Dosiervorrichtung auch dann vor einer Zerstörung durch einfrierende Reduktionsmittelflüssigkeit geschützt, wenn die Verbrennungsanlage außer Betrieb ist und somit nicht über das Abgas Wärme an die Dosiervorrichtung abgibt.

Bei diesem Verfahren kann es vorgesehen sein, beim Ausschalten der Verbrennungsanlage das Heizen eines Bereichs der Absperrvorrichtung zu veranlassen. Es wäre auch möglich, in einem Verfahrensschritt vor dem Heizen und/oder während des Heizens zusätzlich zu prüfen, ob die Außentemperatur in einem Bereich liegt, der das Heizen notwendig macht, d.h. insbesondere zu prüfen, ob die Außentemperatur kleiner oder gleich dem Gefrierpunkt der Reduktionsmittelflüssigkeit ist, oder ob die Außentemperatur um weniger als einen vorgegebenen Wert oberhalb des Gefrierpunkts der Reduktionsmittelflüssigkeit liegt.

Die Heizung erfolgt dabei insbesondere elektrisch, indem ein Stromfluss durch Elemente der Dosiervorrichtung oder eine hierfür vorgesehene Heizpille eine Widerstandsheizung bewirken.

Insbesondere erfolgt die Heizung lokal im Bereich einer Düse der Dosiervorrichtung, der besonders durch Einfrieren des Reduktionsmittels gefährdet ist.

Im Folgenden wird die Erfindung anhand von Ausführungsbeispielen und unter Bezugnahme auf die beigefügten Zeichnungen näher erläutert. Darin zeigen
- Figur 1: eine schematische Darstellung einer nicht zur Erfindung gehörenden Ausführungsform der Dosiervorrichtung;
- Figur 2: eine schematische Darstellung einer ersten Ausführungsform der erfindungsgemäßen Dosiervorrichtung;
- Figur 3: eine schematische Darstellung einer zweiten Ausführungsform der erfindungsgemäßen Dosiervorrichtung und
- Figur 4: ein Detail aus Figur 3.

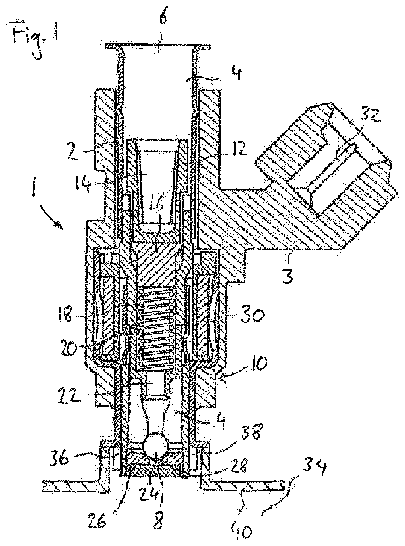

Figur 1 zeigt schematisch eine Dosiervorrichtung 1 zum Dosieren einer Reduktionsmittelflüssigkeit in einen Abgasstrom einer Verbrennungsanlage eines Kraftfahrzeugs.

Die Dosiervorrichtung 1 weist ein Innengehäuse 2 auf, das eine im Wesentlichen zylindrische Kavität 4 umgibt. Die Kavität 4 weist an ihrem oberen Ende einen Einlass 6 für ein flüssiges Reduktionsmittel und an ihrem unteren Ende einen Auslass 8 für das flüssige Reduktionsmittel auf. Ein Außengehäuse 3 umgibt das Innengehäuse 2 zum Teil.

Zwischen dem Einlass 6 und dem Auslass 8 ist eine Absperrvorrichtung 10 in Form eines Ventils angeordnet.

In der Kavität 4 ist ein Filtergehäuse 12 mit einem Filter 14 zur Filterung der Reduktionsmittelflüssigkeit angeordnet. Ferner ist in der Kavität 4 ein Federsitz 16 mit einer Rückstellfeder 18 angeordnet. Die Rückstellfeder 18 steht unter einer Vorspannung zwischen dem Federsitz 16 und einem Nadelsitz 20, der mechanisch mit einer Ventilnadel 22 gekoppelt ist.

Bei Nichtansteuerung des Ventils befindet sich die Ventilnadel 22 in einer Schließposition.

In der Schließposition wird die Ventilnadel 22 mit dem auf ihrer Spitze angeordneten Ball 24 derart in die Richtung des Auslasses 8 gedrückt, dass der Ball 24 fest gegen einen Sitz 26 gepresst wird und den Auslass 8 mit der Düsenplatte 28 verschließt. Die Absperrvorrichtung 10 wird angesteuert über eine elektromagnetische Betätigungseinrichtung 30, die insbesondere eine über den elektrischen Anschluss 32 bestrombare Spule zur Erzeugung eines Magnetfeldes aufweist. Wird die Spule bestromt, so wird die Ventilnadel 22 gegen die Rückstellkraft der Ventilfeder 18 in Richtung des Einlasses 6 bewegt und der Ball 24 hebt sich von dem Sitz 26 ab, so dass Reduktionsmittelflüssigkeit aus der Kavität 4 durch den Auslass 8 in den Abgastrakt 34 gelangen kann.

Gemäß der in Figur 1 gezeigten Ausführungsform der Dosiervorrichtung 1 sind im Bereich der Düsenplatte 28 um das Gehäuse 2 herum und mit elektrischem Kontakt zu dem Gehäuse 2 eine erste Elektrode 36 sowie eine zweite Elektrode 38 vorgesehen, über die ein elektrischer Strom an das Gehäuse 2 angelegt werden kann. Die Elektroden 36 und 38 werden somit über das Gehäuse 2 im Bereich der Düsenplatte 28 kurzgeschlossen und durch den Stromfluss wird das Gehäuse 2 im Bereich der Düsenplatte 28 aufgeheizt. Dadurch wird eine Temperaturerhöhung in diesem Bereich erzeugt, die ausreichend ist, um ein Einfrieren von Reduktionsmittelflüssigkeit zu verhindern.

Dabei kontaktieren die Elektroden 36 und 38 nicht das Abgasrohr 40, sondern sind gegen dieses elektrisch isoliert.

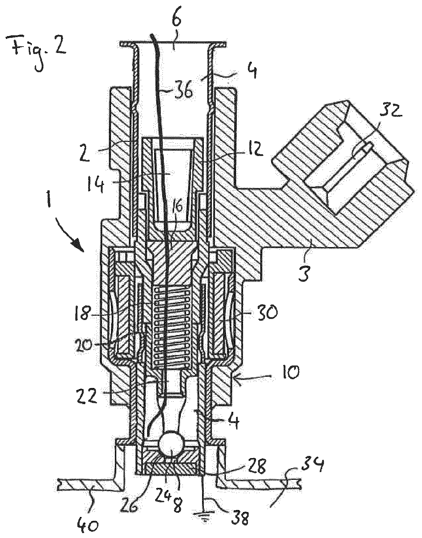

Figur 2 zeigt eine erste Ausführungsform einer erfindungsgemäßen Dosiervorrichtung 1, die sich von der in Figur 1 gezeigten Ausführungsform dadurch unterscheidet, dass eine erste Elektrode 36 durch den Einlass 6 in die Kavität 4 bis in den Bereich der Düse kurz vor dem Auslass 8 geführt ist. Die Elektrode 36 endet frei in der Kavität 4 auf Höhe der Ventilnadel 22. Ein zweiter Anschluss 38 verbindet das Gehäuse 2 mit der Fahrzeugmasse.

Bei dieser Ausführungsform ist es vorgesehen, die elektrische Leitfähigkeit des Reduktionsmittels auszunutzen und einen Stromfluss durch das Reduktionsmittel von der ersten Elektrode 36 zur zweiten Elektrode 38 zu erzeugen. Hierdurch wird das Reduktionsmittel im Bereich vor der Düsenplatte 28 direkt aufgeheizt.

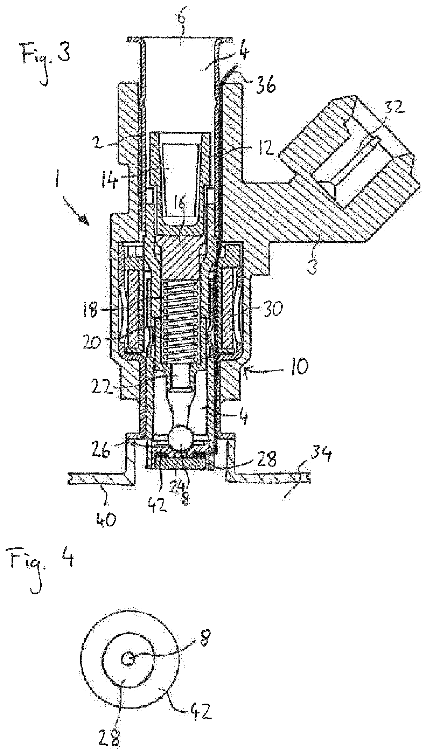

Figur 3 zeigt eine zweite Ausführungsform der erfindungsgemäßen Dosiervorrichtung 1, die sich von den vorher gezeigten dadurch unterscheidet, dass ein Heizelement in Form einer ringförmigen Heizpille 42 an der Düsenplatte 28 angeordnet ist, die durch zumindest eine Elektrode 36 kontaktiert wird. Die Elektrode 36 ist dabei zwischen dem äußeren Gehäuse 3 und dem inneren Gehäuse 2 bis zur Spitze der Dosiervorrichtung 1 im Bereich der Düsenplatte 28 geführt.

Figur 4 zeigt eine Draufsicht auf die Düsenplatte 28 von oben mit der ringförmig den Auslass 8 umgebenden Heizpille 42.

## Patentansprüche

1. Dosiervorrichtung (1) zum Dosieren einer Reduktionsmittelflüssigkeit in einen Abgasstrom einer Verbrennungsanlage, wobei die Dosiervorrichtung (1) einen Einlass (6) und einen Auslass (8) für Reduktionsmittel und eine zwischen dem Einlass (6) und dem Auslass (8) angeordnete Absperrvorrichtung (10) aufweist,
wobei im Bereich der Absperrvorrichtung (10) zumindest ein elektrisch betreibbares Heizelement angeordnet ist,
wobei das zumindest eine Heizelement im Bereich einer Düse der Dosiervorrichtung (1) angeordnet ist, gekennzeichnet, dass das zumindest eine Heizelement dadurch gebildet ist,
dass eine erste Elektrode (36) in der Dosiervorrichtung (1) bis in die Nähe der Düse geführt ist und eine zweite Elektrode (38) ein Gehäuseelement der Dosiervorrichtung (1) im Bereich der Düse kontaktiert, so dass ein Strompfad von der ersten Elektrode (36) durch die Reduktionsmittelflüssigkeit und das Gehäuseelement zur zweiten Elektrode (38) gebildet ist,
oder dass das zumindest eine Heizelement dadurch gebildet ist, dass zumindest eine Heizpille (42) im Bereich der Düse angeordnet und durch zumindest eine Elektrode (36) kontaktiert ist, die durch das Gehäuse (3) der Dosiervorrichtung (1) bis an die Heizpille (42) geführt ist, wobei die Heizpille (42) als gekapseltes PTC-Heizelement ausgebildet ist und die zumindest eine Elektrode (36) zwischen einem inneren Ventilgehäuse (2) und einem äußeren Ventilgehäuse (3) geführt ist.

2. Dosiervorrichtung (1) nach Anspruch 1,
wobei die zumindest eine Heizpille (42) als ringförmige Scheibe um die Düse ausgebildet ist.

3. Dosiervorrichtung (1) nach einem der Ansprüche 1 bis 2, wobei die Dosiervorrichtung (1) als Magnetventil ausgebildet ist.

4. Abgasreinigungseinrichtung für ein Kraftfahrzeug, die folgendes aufweist:
- einen Behälter zur Aufnahme und Vorhaltung eines flüssigen Reduktionsmittels,
- eine Dosiervorrichtung (1) nach einem der Ansprüche 1 bis 3 zur Abgabe des Reduktionsmittels in den Abgasstrom und
- eine den Behälter mit der Dosiervorrichtung (1) verbindende Reduktionsmittelleitung.

5. Verfahren zum Betreiben einer Dosiervorrichtung (1) gemäß einem der Ansprüche 1 bis 3 zum Dosieren einer Reduktionsmittelflüssigkeit in ein Abgas einer Verbrennungsanlage,
wobei ein Bereich der Absperrvorrichtung (10) zumindest dann, wenn die Verbrennungsanlage außer Betrieb ist, über einen Gefrierpunkt der Reduktionsmittelflüssigkeit geheizt wird.

6. Verfahren nach Anspruch 5,
wobei die Heizung elektrisch erfolgt.

7. Verfahren nach Anspruch 5 oder 6,
wobei die Heizung lokal im Bereich einer Düse der Dosiervorrichtung (1) erfolgt.

## Claims

1. Metering device (1) for metering a reducing agent liquid into an exhaust gas stream of a combustion system, wherein the metering device (1) has an inlet (6) and an outlet (8) for reducing agents and a shut-off device (10) which is arranged between the inlet (6) and the outlet (8),
wherein at least one electrically operated heating element is arranged in the region of the shut-off device (10), wherein the at one heating element is arranged in the region of a nozzle of the metering device (1),
**characterized in that** the at least one heating element is formed by virtue of the fact that a first electrode (36) is led in the metering device (1) as far as the vicinity of the nozzle, and a second electrode (38) contacts a housing element of the metering device (1) in the region of the nozzle, with the result that a current path is formed from the first electrode (36) to the second electrode (38) through the reducing agent liquid and the housing element, or **in that** the at least one heating element is formed by virtue of the fact that at least one heating pellet (42) is arranged in the region of the nozzle and contact is made therewith by at least one electrode (36) which is led through the housing (3) of the metering device (1) as far as the heating pellet (42), wherein the heating pellet (42) is embodied as an encapsulated PTC heating element, and the at least one electrode (36) is led between an inner valve housing (2) and an outer valve housing (3).

2. Metering device (1) according to Claim 1, wherein the at least one heating pellet (42) is embodied as an annular disc around the nozzle.

3. Metering device (1) according to one of Claims 1 to 2, wherein the metering device (1) is embodied as a solenoid valve.

4. Exhaust gas purification apparatus for a motor vehicle which has the following:
- a container for holding and making available a liquid reducing agent,
- a metering device (1) according to one of Claims 1 to 3 for outputting the reducing agent into the exhaust gas stream, and
- a reducing agent line connecting the container to the metering device (1).

5. Method for operating a metering device (1) according to one of Claims 1 to 3 for metering a reducing agent liquid into an exhaust gas of a combustion system,
wherein a region of the shut-off device (10) is heated above a freezing point of the reducing agent liquid at least when the combustion system is inoperative.

6. Method according to Claim 5,
wherein the heating is carried out electrically.

7. Method according to Claim 5 or 6,
wherein the heating is carried out locally in the region of a nozzle of the metering device (1).

## Revendications

1. Dispositif de dosage (1) pour le dosage d'un agent de réduction liquide dans un courant de gaz d'échappement d'un système de combustion, le dispositif de dosage (1) présentant une entrée (6) et une sortie (8) pour l'agent de réduction et un dispositif de retenue (10) disposé entre l'entrée (6) et la sortie (8),
dans lequel au moins un élément chauffant à commande électrique est disposé au niveau du dispositif de retenue (10), ledit au moins un élément chauffant étant disposé au niveau d'une buse du dispositif de dosage (1),
**caractérisé en ce que** ledit au moins un élément chauffant est formé **en ce qu'**une première électrode (36) est amenée dans le dispositif de dosage (1) jusqu'à proximité de la buse et une deuxième électrode (38) entre en contact avec un élément de boîtier du dispositif de dosage (1) au niveau de la buse de façon à former un trajet de courant de la première électrode (36) à travers l'agent de réduction liquide et l'élément de boîtier jusqu'à la deuxième électrode (38), ou **en ce que** ledit au moins un élément chauffant est formé **en ce qu'**au moins une pastille chauffante (42) est disposée au niveau de la buse et est mise en contact par au moins une électrode (36) qui est amenée à travers le boîtier (3) du dispositif de dosage (1) jusqu'à la pastille chauffante (42), la pastille chauffante (42) étant réalisée sous la forme d'un élément chauffant à CTP et ladite au moins une électrode (36) étant amenée entre une cage de soupape intérieure (2) et une cage de soupape extérieure (3).

2. Dispositif de dosage (1) selon la revendication 1, dans lequel ladite au moins une pastille chauffante (42) est réalisée sous la forme d'un disque annulaire autour de la buse.

3. Dispositif de dosage (1) selon l'une quelconque des revendications 1 à 2, dans lequel le dispositif de dosage (1) est réalisé sous la forme d'une électrovanne.

4. Système d'épuration des gaz d'échappement pour un véhicule automobile, présentant les éléments suivants :
- un conteneur pour recevoir et fournir un agent de réduction liquide,
- un dispositif de dosage (1) selon l'une quelconque des revendications 1 à 3 pour distribuer l'agent de réduction liquide dans le courant de gaz d'échappement, et
- une conduite d'agent de réduction reliant le conteneur au dispositif de dosage (1).

5. Procédé d'exploitation d'un dispositif de dosage (1) selon l'une quelconque des revendications 1 à 3 pour doser un agent de réduction liquide dans un gaz d'échappement d'un système de combustion,
dans lequel une partie du dispositif de retenue (10) est chauffée au-dessus d'un point de congélation de l'agent de réduction liquide au moins lorsque le système de combustion est hors service.

6. Procédé selon la revendication 5, dans lequel le chauffage est effectué de manière électrique.

7. Procédé selon la revendication 5 ou 6, dans lequel le chauffage est effectué localement au niveau d'une buse du dispositif de dosage (1).
